# EUROPEAN PATENT APPLICATION

(11) **EP 2 884 815 A1**
(43) Date of publication of application: **17.06.2015**
(21) Application number: 13827922.9
(22) Date of filing: 21.06.2013
(51) Int. Cl.: H04W 88/08

(54) **METHOD AND DEVICE FOR INTERACTING DATA AMONG BUILDING BASE BAND UNIT (BBU) FRAMES IN WIRELESS SOFT BASE STATION**

(30) Priority: 09.08.2012 CN 201210282479
(71) Applicant: ZTE Corporation, Shenzhen, Guangdong 518057 (CN)
(72) Inventor: ZHAO, Xing, Shenzhen Guangdong 518057 (CN); YANG, Xiaomin, Shenzhen Guangdong 518057 (CN); SHE, Zhixing, Shenzhen Guangdong 518057 (CN); QIU, Zhigang, Shenzhen Guangdong 518057 (CN); WANG, Yangfeng, Shenzhen Guangdong 518057 (CN)
(74) Representative: Brevalex
(86) International application number: PCT/CN2013/077721
(87) International publication number: WO 2014/023134

(57) **Abstract**

Disclosed are a method and device of data interaction among BBU frames in wireless soft base stations, and the method according to the present disclosure include: respective interconnected optical ports of multiple BBU frames are connected successively to form a BBU ring network; after each BBU frame in the BBU ring network performs forwarding and mapping processing on baseband downlink IQ data from an adjacent BBU frame, the baseband downlink IQ data are mapped to a corresponding logic channel of an optical port of an RRU of the BBU frame so that the RRU of the BBU frame performs downlink processing thereon; after each BBU frame performs forwarding and mapping processing on uplink IQ data of a logic channel of its RRU, the uplink IQ data are mapped to a corresponding logic channel of the interconnected optical port of the BBU frame, and mapped uplink IQ data are transmitted to the adjacent BBU frame for uplink processing.

## Description

### TECHNICAL FIELD

The present disclosure relates to the field of resource sharing among Building Base band Unit (BBU) frames of soft base stations in wireless communications, and in particular to a method and device of data interaction among BBU frames in wireless soft base stations.

### BACKGROUD

With the development of wireless communication systems over many years, soft base stations based on remote RF techniques, which support multiple systems, have been the main stream of the development of wireless base stations. However, BBU frames are separated from each other in existing soft base station configurations, thus an individual BBU isolated within each region has limited base band resources and processing capabilities.

With the growing development of modern wireless communication services and gradual increase in data volume, base station systems in a single region are required to process more and more data. Meanwhile, existing base station configurations are challenged by unbalanced loads resulted from tidal effects inherent to communication services.

The formation of processing cloud by interconnecting BBU frames can enlarge base band capacity of individual BBUs and improve utilization and processing capabilities of devices so as to meet various complicated (mixed) networking demands.

Original work desired to be managed by multiple sites is integrated into one site for configuration and management, thus decreasing greatly construction cost and maintenance cost of operators, and facilitating maintenance and management.

### SUMMARY

The present disclosure is intended to provide a method of data interaction among BBU frames in wireless soft base stations so as to solve above technical problems in the prior art.

The present disclosure is further intended to provide a device for implementing the above method.

According to a first aspect of the present disclosure, provided is a method of data interaction among BBU frames in wireless soft base stations, and the method includes:
respective interconnected optical ports of multiple BBU frames are connected successively to form a BBU ring network;
after each BBU frame in the BBU ring network performs forwarding and mapping processing on baseband downlink IQ data from an adjacent BBU frame, the baseband downlink IQ data are mapped to a corresponding logic channel of an optical port of an RRU of the BBU frame so that the RRU of the BBU frame performs downlink processing thereon;
after each BBU frame performs forwarding and mapping processing on uplink IQ data of a logic channel of its RRU, the uplink IQ data are mapped to a corresponding logic channel of the interconnected optical port of the BBU frame, and mapped uplink IQ data are transmitted to the adjacent BBU frame for uplink processing.

The method according to the present disclosure may further include: after each BBU frame performs uplink mapping processing on the uplink IQ data from an RRU of the adjacent BBU frame, the uplink IQ data are transmitted to a baseband processing module of the BBU frame for uplink data processing; and each BBU frame transmits, baseband downlink IQ data of the logic channel that are issued by the baseband processing module of the BBU frame, to the adjacent BBU frame for processing.

The method according to the present disclosure may further include: each BBU frame performs downlink time delay processing on baseband downlink IQ data of a logic channel of the BBU frame, and aligns the baseband downlink IQ data of the logic channel of the BBU frame with the baseband downlink IQ data from the adjacent BBU frame.

Specifically, when the downlink time delay processing is performed, a downlink time delay value for which the baseband downlink IQ data of the BBU frame are delayed is equal to a sum of time taken by optical port framing, transmission over an optical fiber, optical port de-framing and forwarding and routing processing experienced by the baseband downlink IQ data from the adjacent BBU frame.

The method according to the present disclosure may further include: each BBU frame performs uplink time delay processing on uplink IQ data of the logic channel of its RRU, and aligns the uplink IQ data of the logic channel of the BBU frame with uplink IQ data from the adjacent BBU frame.

Specifically, when the uplink time delay processing is performed, a uplink time delay value for which the uplink IQ data of the BBU frame are delayed is equal to a sum of time taken by optical port de-framing, forwarding and routing, transmission over an optical fiber and optical port framing experienced by the uplink IQ data from the adjacent BBU frame.

Herein, the method may further include: clock synchronization of all BBU frames in the BBU ring network is implemented through a master-slave synchronization way in the BBU ring network.

Specifically, the master-slave synchronization way may include: a BBU frame where a Service Scheduling Control Center (CMCP) is located is regarded as a master clock frame, and other BBUs are regarded as a slave clock frame.

Specifically, the implementing clock synchronization of all BBU frames in the BBU ring network through a master-slave synchronization way may include:
clock synchronization information including a frame header, a frame number and auxiliary information is transferred through an interconnected optical fiber between the master clock frame and the slave clock frame;
each slave clock discriminates phases of information including frame headers and frame numbers of a BBU frame and its adjacent BBU frame, measures differences between frame synchronization and frame numbers of the BBU frame and its adjacent BBU frame, and implements clock synchronization of the BBU frame using the auxiliary information.

Specifically, a relative time delay between IQ data of an uplink/downlink channel of the adjacent BBU frame and IQ data of an uplink/downlink channel of the BBU frame are measured and calculated through comparing by each BBU frame a beat interval between a frame header pulse of the BBU frame and a frame header pulse from the adjacent BBU frame so as to determine the downlink time delay value and the uplink time delay value.

According to a second aspect of the present disclosure, provided is a device for implementing data interaction among BBU frames in wireless soft base stations, and the device includes:
an interconnected optical port, arranged in each BBU frame, configured to connect adjacent BBU frames to form a BBU ring network;
a baseband downlink IQ data forwarding and crossing module, arranged in each BBU frame, configured to, after performing forwarding and mapping processing on baseband downlink IQ data of an adjacent BBU frame that are supplied via the interconnected optical port, map the baseband downlink IQ data to a corresponding logic channel of an optical port of an RRU of the BBU frame so that the RRU of the BBU frame performs downlink processing thereon; and
an uplink IQ data forwarding and crossing module, arranged in each BBU frame, configured to, after performing forwarding and mapping processing on uplink IQ data of a logic channel of an RRU of the BBU frame, map the uplink IQ data to a corresponding logic channel of the interconnected optical port, and transmit mapped uplink IQ data to the adjacent BBU frame for uplink processing.

The above device according to the present disclosure may further include: a baseband downlink IQ data delay module, arranged in each BBU frame, configured to delay baseband downlink IQ data of a logic channel of the BBU frame, and align the baseband downlink IQ data of the logic channel of the BBU frame with baseband downlink IQ data from the adjacent BBU frame; and
an uplink IQ data delay module, arranged in each BBU frame, configured to delay uplink IQ data of the logic channel of the BBU frame, and align the uplink IQ data of the logic channel of the BBU frame with uplink IQdata from the adjacent BBU frame.

The above device according to the present disclosure may further include: a clock information parsing and comparing module, arranged in the interconnected optical port of each BBU frame, configured to implement clock synchronization of all BBU frames in the BBU ring network through a master-slave synchronization way in the BBU ring network.

Compared to the prior art, the present disclosure can implement synchronization of wireless frames and switching of uplink/downlink data among BBU frames, thus providing foundation for combined layout and management of multiple sites; logics and softwares can be upgraded on the basis of processing logics of an existing switching module in a multi-mode BBU frame, thus implementing synchronization of information among frames and sharing of baseband resources without occupation of additional single-board hardware resources.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure instead of constituting improper limitation to the present disclosure. In the drawings,
Fig. 1 is a schematic diagram showing an application scenario of a BBU interconnected (cluster) system according to the present disclosure;
Fig. 2 is a schematic diagram showing inter-frame connecting conditions of a BBU interconnection (cluster) according to the present disclosure;
Fig. 3 is a schematic diagram showing a method of synchronization and data interaction among BBUs in wireless soft base stations according to the present disclosure;
Fig. 4 is a schematic diagram showing a device for implementing the method shown in Fig. 3 according to the present disclosure;
Fig. 5 is a schematic diagram showing routes of a switching module in the case of an individual frame or interconnection according to the present disclosure;
Fig. 6 shows a schematic diagram of an embodiment using routes of the switching module as shown in Fig. 5; and
Fig. 7 is a schematic diagram showing circulation of clock data, IQ data and additional information in a BBU interconnected system according to the present disclosure.

### DETAILED DESCRIPTION

In order to make technical problems to be solved, technical solutions and advantages of the present disclosure more clear, the present disclosure will be further elaborated below in combination with the accompanying drawings and embodiments. The specific embodiments are only used to interpret the present disclosure instead of limiting the present disclosure.

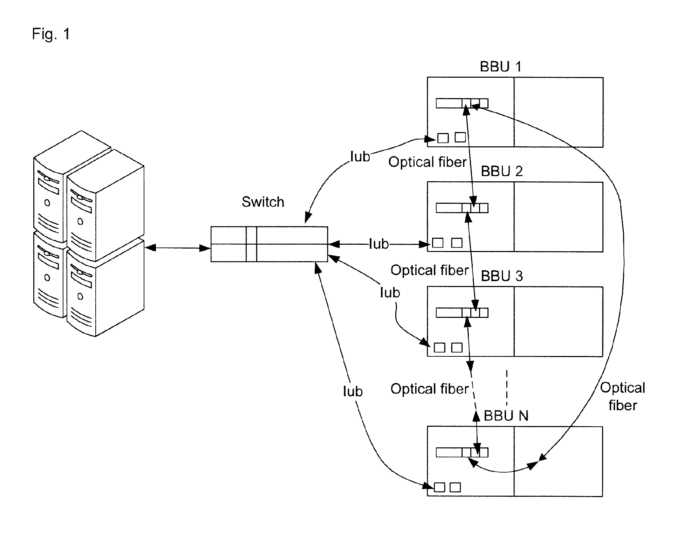

Fig. 1 shows an application scenario of a BBU interconnection according to the present disclosure, in Fig. 1, a base station cluster consists of multiple BBUs placed at a same physical location, wherein each BBU includes a main control module, a switching module and a baseband processing module. Each BBU can be connected to a corresponding Radio Remote Unit (RRU) through an optical port arranged in a switching module of the BBU so as to form a BBU frame. Abis/lub interfaces of all main control modules are connected to an external Ethernet switch for transmitting and scheduling control signalings and service data.

In addition, each BBU is provided with an interconnected optical port interconnected to an adjacent BBU frame, all these interconnected optical ports are connected successively to form the BBU ring network according to the present disclosure.

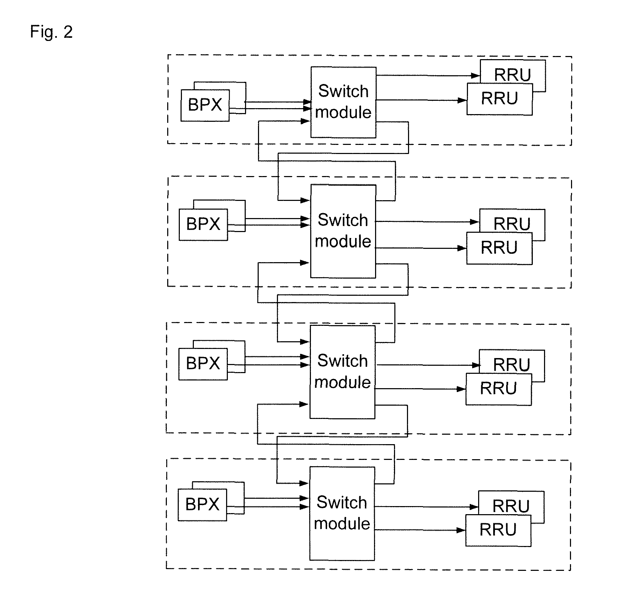

Fig. 2 shows interconnection conditions of multiple BBU frams, as shown in Fig. 2, respective BBU frames are connected successively through interconnected optical ports so that a switching module of each BBU has more than two interconnected optical ports connected with a switching module of other BBU so as to form a ring network for transferring IQ data shared among frames and clock synchronization information.

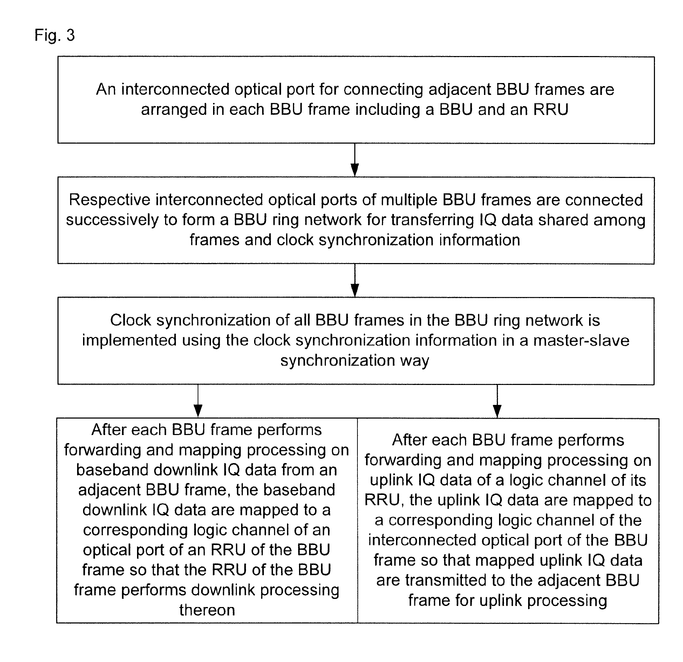

Fig. 3 shows a method of data interaction among BBUs in wireless soft base stations according to the present disclosure, and the method includes the following steps:

An interconnected optical port for connecting adjacent BBU frames are arranged in each BBU frame including a BBU and an RRU; specifically, as shown in Fig. 1, the interconnected optical port is arranged on a switching module of each BBU.

Respective interconnected optical ports of multiple BBU frames are connected successively to form a BBU ring network for for transferring IQ data shared among frames and clock synchronization information, as shown in Fig. 1 and Fig. 2.

Clock synchronization of all BBU frames in the BBU ring network is implemented using the clock synchronization information in a master-slave synchronization way.

After each BBU frame performs forwarding and mapping processing on baseband downlink IQ data from an adjacent BBU frame, the baseband downlink IQ data are mapped to a corresponding logic channel of an optical port of an RRU of the BBU frame so that the RRU of the BBU frame performs downlink processing thereon;

After each BBU frame performs forwarding and mapping processing on uplink IQ data of a logic channel of its RRU, the uplink IQ data are mapped to a corresponding logic channel of the interconnected optical port of the BBU frame so that mapped uplink IQ data are transmitted to the adjacent BBU frame for uplink processing.

In addition, the method according to the present disclosure may further include the following steps: after each BBU frame performs uplink mapping processing on the uplink IQ data from an RRU of the adjacent BBU frame, the uplink IQ data are transmitted to a baseband processing module of the BBU frame for uplink data processing; and each BBU frame transmits, baseband downlink IQ data of the logic channel that are issued by the baseband processing module of the BBU frame, to the adjacent BBU frame for processing.

The method of data interaction among BBU frames in wireless soft base stations according to the present disclosure may further include the following step: each BBU frame performs downlink time delay processing on baseband downlink IQ data of a logic channel of the BBU frame so that the baseband downlink IQ data of the logic channel of the BBU frame are aligned with the baseband downlink IQdata from the adjacent BBU frame.

Specifically, a downlink time delay value for which the baseband downlink IQ data of the BBU frame are delayed in the above step of downlink time delay processing is equal to a sum of time taken by optical port framing, transmission over an optical fiber, optical port de-framing and forwarding and routing processing experienced by the baseband downlink IQ data from the adjacent BBU frame.

The method of data interaction among BBU frames in wireless soft base stations according to the present disclosure may further include the following step: each BBU frame performs uplink time delay processing on uplink IQ data of the logic channel of its RRU so that the uplink IQ data of the logic channel of the BBU frame are aligned with uplink IQ data from the adjacent BBU frame.

An uplink time delay value for which the uplink IQ data of the BBU frame are delayed in the above step of uplink time delay processing is equal to a sum of time taken by optical port de-framing, forwarding and routing, transmission over an optical fiber and optical port framing experienced by the uplink IQ data from the adjacent BBU frame.

The above uplink/downlink time delay processing is implemented generally using a cache time delay of a logic layer so that IQ frames of the uplink/downlink channel of the BBU frame are aligned with IQ data frames from the uplink/downlink channel of the adjacent BBU frame.

The master-slave synchronization way according to the present disclosure may include: a BBU frame where a CMCP is located is regarded as a master clock frame, and other BBUs are regarded as a slave clock frame. Clock synchronization information including a frame header, a frame number and auxiliary information is transferred through an interconnected optical fiber between the master clock frame and the slave clock frame, wherein the auxiliary information includes phase discrimination information of each level of BBU and inter-board information of UMTS; each slave clock discriminates phases of information including frame headers and frame numbers of a BBU frame and its adjacent BBU frame, measures differences between frame synchronization and frame numbers of the BBU frame and its adjacent BBU frame, and implements clock synchronization of the BBU frame using the auxiliary information.

In addition, a relative time delay between IQ data of an uplink/downlink channel of the adjacent BBU frame and IQ data of an uplink/downlink channel of the BBU frame are measured and calculated through comparing by each BBU frame a beat interval between a frame header pulse of the BBU frame and a frame header pulse from the adjacent BBU frame so as to determine the downlink time delay value and the uplink time delay value.

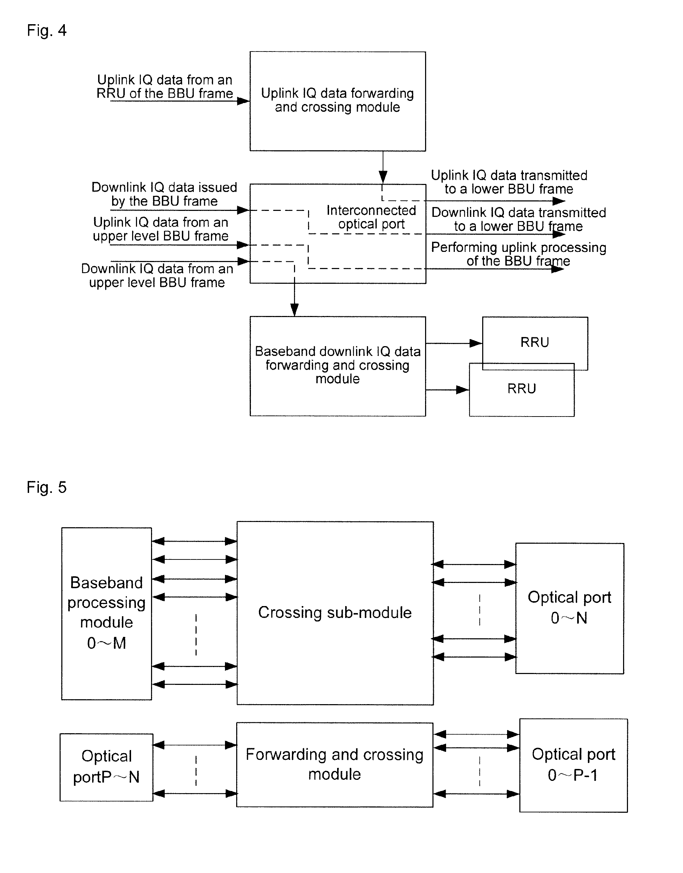

Fig. 4 shows a device for implementing data interaction among BBUs in wireless soft base stations according to the present disclosure, and the device includes:
an interconnected optical port, arranged in each BBU frame including a BBU and an RRU, configured to connect adjacent BBU frames;
a baseband downlink IQ data forwarding and crossing module, arranged in each BBU frame, configured to, after performing forwarding and mapping processing on baseband downlink IQ data of an adjacent BBU frame that are supplied via the interconnected optical port, map the baseband downlink IQ data to a corresponding logic channel of an optical port of an RRU of the BBU frame so that the RRU of the BBU frame performs downlink processing thereon; and
an uplink IQ data forwarding and crossing module, arranged in each BBU frame, configured to, after performing forwarding and mapping processing on uplink IQ data of a logic channel of an RRU of the BBU frame, and map the uplink IQ data to a corresponding logic channel of the interconnected optical port so as to transmit mapped uplink IQ data to the adjacent BBU frame for uplink processing.

As shown in Fig. 4, the uplink IQ data from an RRU of the adjacent BBU frame are supplied via the interconnected optical port to a baseband processing module for uplink data processing, and baseband downlink IQ data of the logic channel that are issued by the baseband processing module of the BBU frame are transmitted to the adjacent BBU frame for processing.

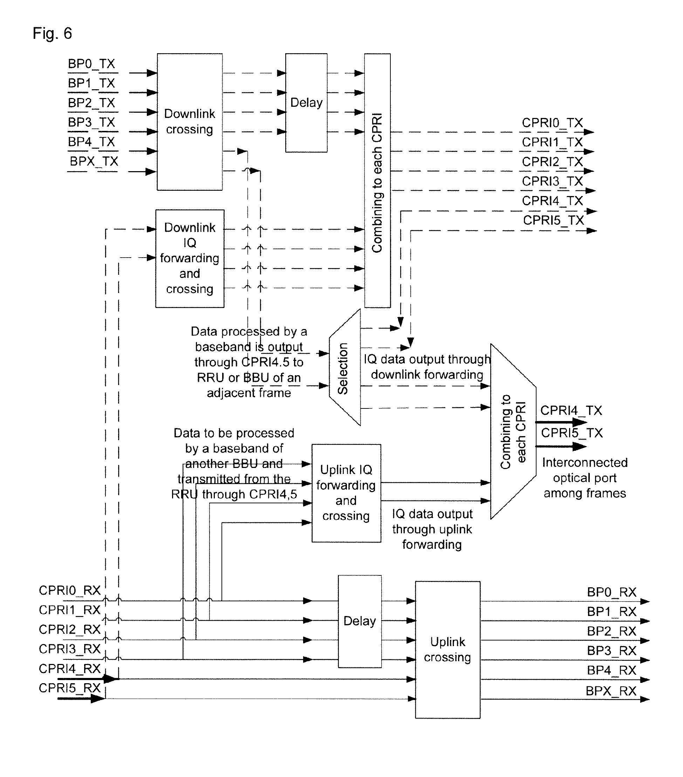

In addition, the device according to the present disclosure may further include: a baseband downlink IQ data delay module (it will be elaborated below with reference to Fig. 6), arranged in each BBU frame, configured to delay baseband downlink IQ data of a logic channel of the BBU frame, and align the baseband downlink IQ data of the logic channel of the BBU frame with baseband downlink IQdata from the adjacent BBU frame; and an uplink IQ data delay module, arranged in each BBU frame (it will be elaborated below with reference to Fig. 6), configured to delay uplink IQ data of the logic channel of the BBU frame, and align the uplink IQ data of the logic channel of the BBU frame with uplink IQ data from the adjacent BBU frame.

The above device according to the present disclosure may further include: a clock information parsing and comparing module, arranged in the interconnected optical port of each BBU frame, configured to implement clock synchronization of all BBU frames in the BBU ring network through a master-slave synchronization way in the BBU ring network.

By taking a BBU as an example, the above device according to the present disclosure are elaborated.

Fig. 5 shows a basic structure of a BBU according to the present disclosure, wherein baseband processing modules 0 to M, a crossing sub-module, optical ports 0 to N and optical ports 0 to P-1 belong to components of an existing BBU, thus descriptions thereof are omitted. Optical ports P to N are interconnected optical ports arranged in a switching module of the BBU according to the present disclosure, the forwarding and crossing module is a module arranged in the switching module according to the present disclosure, and the forwarding and crossing module includes aforementioned uplink IQ data forwarding and crossing module and baseband downlink IQ data forwarding and crossing module.

Fig. 6 shows details of a switching module of a BBU according to the present disclosure. In below description, CPRI0, CPRI1, CPRI2, CPRI3, CPRI4 and CPRI5 are referred respectively as optical port 0, optical port 1, optical port 2, optical port 3, optical port 4 and optical port 5, wherein optical ports 4 to 5 correspond to interconnected optical ports P to N in Fig. 5, optical ports 0 to 3 correspond to interconnected optical ports 0 to P-1 in Fig. 5, and optical ports 0 to 5 correspond to interconnected optical ports 0 to N in Fig. 5.

As shown in Fig. 6, a forwarding and routing logic is divided into a downlink portion (represented by thin dashed lines and thick dashed lines) and an uplink portion (represented by thin solid lines and thick solid lines) according to directions of data flow. The downlink direction shows data generated from downlink crossing of baseband of adjacent BBU frames, after being received by interconnected optical ports 4 to 5, received data are framed according to configuration information of a CPU in a downlink forwarding and crossing sub-module of the BBU frame, and then issued to specified optical ports 0 to 3 of an RRU to which the BBU frame is connected.

The uplink direction shows that user data uploaded by optical ports 0 to 3 connecting RRUs are mapped to corresponding logic channels of interconnected optical ports 4 to 5 in a forwarding and crossing sub-module according to uplink forwarding configuration in the CPU, and after being transmitted to a switching module of an adjacent BBU frame, mapped data are re-mapped through uplink crossing to corresponding baseband processing modules (BP0 to BPX) for processing.

Clocks between respective interconnected BBU frames are synchronized in a master-slave way with a BBU frame where a CMCP is located being regarded as a master clock frame and other BBUs being regarded as a slave clock frame. The master clock frame and slave clock frame are configured by softwares, when it is configured as a master clock frame, its clock synchronization is consistent with the case of a single station, and the slave clock is synchronized with the master clock. The CMCP is in charge of managing topology of clocks of a BBU cluster, including: specifying locations where respective slave clock frames of the cluster are located in a clock chain of the cluster, and specifying optical ports, such as optical port 4 or 5, of corresponding switching modules from whose received signals BBUs of respective slave clock frames should extract clocks.

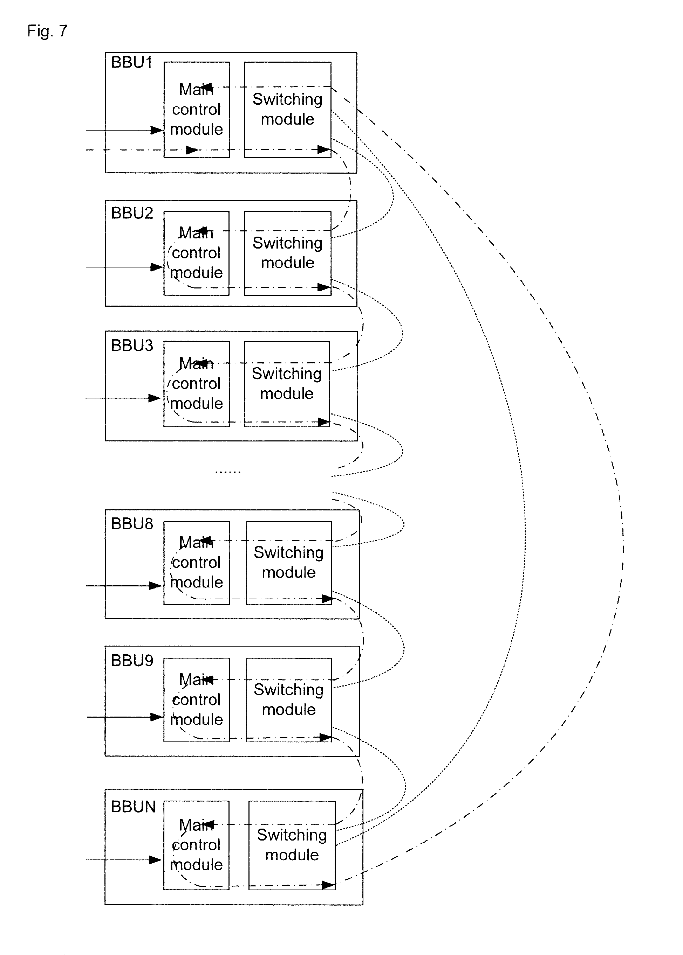

Clock synchronization information transferred though an interconnected optical fiber between a master clock frame and a slave clock frame of the BBU cluster includes Fsync information (10 ms frame header Fr and frame number) and auxiliary information (including phase discrimination information of each level of BBU and inter-board information of UMTS). As shown in Fig. 7, solid lines represent external clock reference sources, dot-and-dash line represent transmission paths of clocks of a BBU cluster, and dashed lines represent transmission paths of IQ data, and transmission paths of auxiliary information are similar to those of the IQ data.

Clock extraction and synchronization are mainly implemented by logics in ports of a switching module in a phase discrimination way, and the two sides of phase discrimination include a BBU frame and Fsync related information of a higher level BBU frame connected to the BBU frame. After phase discrimination, the switching module transmits to a main control module measured differences of frame synchronization and frame numbers between an BBU frame and its adjacent BBU frame and received auxiliary information, and the difference and information are used for synchronization algorithms among main control modules. The operation master clock and Fsync information of the switching module is also provided by the main control module, thus for a slave clock frame, loop-locked feedback mechanism of such phase discrimination can be used so that the clock and frame number of the BBU frame are synchronized with those of the higher level BBU frame.

Phase discrimination signals: 80 ms signals transmitted to the switching module of the BBU frame by the higher level BBU frame through an optical fiber and 80 ms signals transmitted to the switching module by the main control module of the BBU, wherein the 80 ms signals are generated in a way of mod periodic frame information of Fsync 10 ms based on Fsync signals. Frequency of phase discrimination counter: 122.88MHz or above. If phase discrimination frequency of 122.88MHz is selected, it can be ensured, in combination with the aforementioned method, clock synchronization among 16-level BBU cascade frames. In addition, through selecting different periods of phase discrimination signals and accuracies of phase discrimination frequency, different levels of BBU cascade frames can be extended to in the case of clock synchronization.

Alignment of data frames among adjacent BBU frames is implemented in a time delay measurement and caching compensation way. A relative time delay between IQ data of an uplink/downlink channel that crosses over frames and IQ data of an uplink/downlink channel of the BBU frame are measured through comparing a beat interval between an Fr pulse (e.g., 10 ms frame header) of the BBU frame and a over-frame Fr pulse and through calculating a time delay taken to pass an additional path by over-frame data.

Fr pulses are benchmark for frame synchronization among BBU frames, and they are aligned in a switching module of respective BBU frames, when being transmitted to an adjacent BBU frame, the Fr pulses will experience path delays caused by optical port i.e., CPRI transmission/reception clock domain switching or chip header-aligned caching and transmission through a high-speed serial transceiver and over an optical fiber, and these path delays are obtained through comparing a time difference between Fr pulses of the switching module of the BBU frame and received Fr pulses that cross over the BBU frame.

A relative time delay value Tdl_iq_delay of over-frame baseband downlink IQ data is equal to a processing delay from downlink crossing to CPRI i.e., optical port framing + Fr difference + CPRI i.e., optical port framing + a delay of the downlink forwarding and crossing sub-module. As shown in Fig. 6, a relative time delay value Tul_iq_delay of over-frame uplink IQ data is equal to a delay of the uplink forwarding and crossing sub-module + CPRI i.e., optical port framing + Fr difference + a processing delay from CPRI de-framing to uplink crossing.

According to the relative time delay value Tdl_iq_delay of over-frame baseband downlink IQ data, a caching processing having an equal value is added to baseband downlink IQ data of the BBU frame so that the baseband downlink IQ data of the BBU frame are aligned with baseband downlink IQ data from an adjacent BBU frame. As shown in Fig. 6, in a cluster mode, after being processed by downlink crossing, the baseband downlink IQ data of the BBU frame are cached and then combined with the baseband downlink IQ data from the adjacent frame.

According to the relative time delay value Tul_iq_delay of over-frame uplink IQ data, a caching processing having an equal value is added to uplink IQ data of an RRU of the BBU frame so that the uplink IQ data of the BBU frame are aligned with uplink IQ data from an adjacent BBU frame. As shown in Fig. 6, in a cluster mode, after being processed by optical port de-framing and caching deley, the uplink IQ data of the RRU of the BBU together with uplink data from an adjacent BBU frame are processed by secondary crossing so as to be mapped into respective baseband boards.

The present disclosure can implement synchronization of wireless frames and switching of uplink/downlink data among BBU frames, thus providing foundation for combined layout and management of multiple sites. Logics and softwares can be upgraded on the basis of processing logics of an existing switching module in a multi-mode BBU frame, thus implementing synchronization of information among frames and sharing of baseband resources without occupation of additional single-board hardware resources.

The present disclosure can fully eliminate the inconsistency of delays caused by connections and forwarding processing among BBU frames in an interconnection mode, IQ data of uplink/downlink channels of a BBU frame and its adjacent BBU frame are completely aligned and synchronized, thus providing basic foundation and bottom layer assurance for system-level service scheduling and real-time data communication in a case of cascade BBUs.

Although the present disclosure is elaborated herein, the present disclosure is not limited to the above description, and those skilled in the art can make various modifications according to the principle of the present disclosure. Therefore, it will be appreciated that modifications made in accordance with the principle of the present disclosure should fall within the scope of protection of the present disclosure.

## Claims

1. A method of data interaction among BBU frames in wireless soft base stations, comprising:
connecting successively respective interconnected optical ports of multiple BBU frames to form a BBU ring network;
after each BBU frame in the BBU ring network performs forwarding and mapping processing on baseband downlink IQ data from an adjacent BBU frame, mapping the baseband downlink IQ data to a corresponding logic channel of an optical port of an RRU of the BBU frame so that the RRU of the BBU frame performs downlink processing thereon;
after each BBU frame performs forwarding and mapping processing on uplink IQ data of a logic channel of its RRU, mapping the uplink IQ data to a corresponding logic channel of the interconnected optical port of the BBU frame, and transmitting mapped uplink IQ data to the adjacent BBU frame for uplink processing.

2. The method according to claim 1, further comprising:
performing downlink time delay processing, by each BBU frame, on baseband downlink IQ data of a logic channel of the BBU frame, and aligning the baseband downlink IQ data of the logic channel of the BBU frame with the baseband downlink IQ data from the adjacent BBU frame.

3. The method according to claim 2, **characterized in that** when the downlink time delay processing is performed, a downlink time delay value for which the baseband downlink IQ data of the BBU frame are delayed is equal to a sum of time taken by optical port framing, transmission over an optical fiber, optical port de-framing and forwarding and routing processing experienced by the baseband downlink IQ data from the adjacent BBU frame.

4. The method according to claim 1, further comprising:
performing uplink time delay processing, by each BBU frame, on uplink IQ data of the logic channel of its RRU, and aligning the uplink IQ data of the logic channel of the BBU frame with uplink IQ data from an adjacent BBU frame.

5. The method according to claim 4, **characterized in that** when the uplink time delay processing is performed, a uplink time delay value for which the uplink IQ data of the BBU frame are delayed is equal to a sum of time taken by optical port de-framing, forwarding and routing, transmission over an optical fiber and optical port framing experienced by the uplink IQ data from the adjacent BBU frame.

6. The method according to any one of claims 1 to 5, further comprising: implementing clock synchronization of all BBU frames in the BBU ring network through a master-slave synchronization way in the BBU ring network.

7. The method according to claim 6, **characterized in that** the master-slave synchronization way comprises: regarding a BBU frame where a Service Scheduling Control Center (CMCP) is located as a master clock frame, and regarding other BBU frames as a slave clock frame.

8. The method according to claim 7, **characterized in that** the implementing clock synchronization of all BBU frames in the BBU ring network through a master-slave synchronization way comprises:
transferring clock synchronization information including a frame header, a frame number and auxiliary information through an interconnected optical fiber between the master clock frame and the slave clock frame;
discriminating, by each slave clock, phases of information including frame headers and frame numbers of a BBU frame and its adjacent BBU frame, measuring differences between frame synchronization and frame numbers of the BBU frame and its adjacent BBU frame, and implementing clock synchronization of the BBU frame using the auxiliary information.

9. The method according to claim 3 or 5, further comprising:
measuring and calculating a relative time delay between IQ data of an uplink/downlink channel of the adjacent BBU frame and IQ data of an uplink/downlink channel of the BBU frame through comparing by each BBU frame a beat interval between a frame header pulse of the BBU frame and a frame header pulse from the adjacent BBU frame so as to determine the downlink time delay value and the uplink time delay value.

10. A device for implementing data interaction among BBU frames in wireless soft base stations, comprising:
an interconnected optical port, arranged in each BBU frame, configured to connect adjacent BBU frames to form a BBU ring network;
a baseband downlink IQ data forwarding and crossing module, arranged in each BBU frame, configured to, after performing forwarding and mapping processing on baseband downlink IQ data of an adjacent BBU frame that are supplied via the interconnected optical port, map the baseband downlink IQ data to a corresponding logic channel of an optical port of an RRU of the BBU frame so that the RRU of the BBU frame performs downlink processing thereon; and
an uplink IQ data forwarding and crossing module, arranged in each BBU frame, configured to, after performing forwarding and mapping processing on uplink IQ data of a logic channel of an RRU of the BBU frame, map the uplink IQ data to a corresponding logic channel of the interconnected optical port, and transmit mapped uplink IQ data to the adjacent BBU frame for uplink processing.

11. The device according to claim 10, further comprising:
a baseband downlink IQ data delay module, arranged in each BBU frame, configured to delay baseband downlink IQ data of a logic channel of the BBU frame, and align the baseband downlink IQ data of the logic channel of the BBU frame with baseband downlink IQ data from the adjacent BBU frame; and
an uplink IQ data delay module, arranged in each BBU frame, configured to delay uplink IQ data of the logic channel of the BBU frame, and align the uplink IQ data of the logic channel of the BBU frame with uplink IQ data from the adjacent BBU frame.

12. The device according to claim 10 or 11, further comprising: a clock information parsing and comparing module, arranged in the interconnected optical port of each BBU frame, configured to implement clock synchronization of all BBU frames in the BBU ring network through a master-slave synchronization way in the BBU ring network.
